Europäisches Patentamt

(19) European Patent Office

Office européen des brevets

(11) Publication number: **0 148 567**
**B1**

(12) **EUROPEAN PATENT SPECIFICATION**

(45) Date of publication of patent specification: **08.02.89**

(21) Application number: **84307606.8**

(22) Date of filing: **05.11.84**

(51) Int. Cl.⁴: **C 08 L 23/04, C 08 J 5/18 //
(C08L23/04, 25:02)**

(54) **Film blends of a polyethylene and a polystyrene.**

(30) Priority: **21.11.83 US 553901**

(43) Date of publication of application:
**17.07.85 Bulletin 85/29**

(45) Publication of the grant of the patent:
**08.02.89 Bulletin 89/06**

(84) Designated Contracting States:
**BE DE FR GB IT NL**

(56) References cited:
**EP-A-0 024 270
DE-A-2 064 068
GB-A-1 146 421
GB-A-1 592 425
US-A-3 364 284
US-A-4 151 159**

(73) Proprietor: **MOBIL OIL CORPORATION**
**150 East 42nd Street
New York New York 10017 (US)**

(72) Inventor: **Canterino, Peter John
39 Mary Drive
Towaco New Jersey 07082 (US)**
Inventor: **Shaw, Richard Gregg
260 Carlton Avenue
Piscataway New Jersey 08854 (US)**

(74) Representative: **Cooper, John Anthony et al
Mobil Court 3 Clements Inn
London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Most thermoplastic film compositions are characterised by having a resistance to folding or creasing at normal ambient temperatures. Two materials that are commonly employed in the wrapping of comestibles, such as candy, are glassine paper and waxed paper. Glassine paper is known as a thin dense paper, supposedly highly resistant to the passage of air and oils. However, in terms of today's present technology, glassine paper is not as good a barrier to air and oleaginous material as the food industry would like to see. In addition glassine paper is made by a comparatively expensive process. Waxed paper also is a comparatively expensive material that does have limited use in the food wrapping industry, particularly with the advent of microwave ovens. However, waxed paper is heat sensitive and does not provide adequate barrier to air. It would be highly desirable to have an inexpensive plastics film substitute for glassine paper and waxed paper which has some of the desirable physical characteristics of these materials but to a greater degree.

U.S. Patents 4367312; 4151159; and 3765999, and G.B. Patent 1146421 all disclose polymer blends comprising polyethylene and formed as film.

This invention provides a film having deadfold and paper-tear characteristics comprising a uniform blend of from 65 to 90% by weight of a linear low density polyethylene and from 10 to 35% by weight of a polystyrene based on the total weight of the film, the blend containing no fillers.

The term "dead-fold" refers to the property which will permit the film to be folded upon itself, creased with light pressure, and have the film retain an extremely acute angle at the fold point. Having the "paper-like tear" characteristics means that the film can be torn fairly easily, in any direction without the impediment of any film orientation. In contrast thereto polymer films not having dead foldable characteristics, such as polyethylene, tend to revert to the unfolded condition. A rounding at the creaseline progresses after the crease pressure is terminated.

The LLDPE is a special form of a copolymer of ethylene and an alpha olefin such as butene-1, hexene-1, or octene-1. These linear low density ethylene copolymers are commercially available materials having a density range of 0.918—0.938 gm/cm³ and are manufactured by low pressure processes employing organometallic catalysts. These materials usually contain from 1 to 5 mole percent of $C_3$—$C_{10}$ alpha-olefin hydrocarbon copolymerized with ethylene. Manufacturing processes for linear low density polyethylenes are disclosed in U.S. Patent Nos. 4,076,698 and 4,205,021.

The polystyrene contemplated, as indicated above, is crystal polystyrene, poly(p - methylstyrene) and mixtures thereof. Crystal polystyrene is a clear amphorous polymer which exhibits high stiffness and good dimensional stability. The commercial grades of crystal polystyrene offer a wide range in melt flow index with high heat, high molecular weight grades of around 2 g/10 minutes (ASTM Condition G) and other grades as high as 20 g/10 minutes.

The poly(p-methylstyrene) (PPMS) preferably contains less than 40% meta-methylstyrene and is substantially free of ortho-methylstyrene. The preferred PPMS is more particularly defined in U.S. Patent No. 4,347,344.

Set forth below is an exemplary method of forming a blown tubular film of the present invention. Prior to extrusion, the components of the desired blend are mixed to form a substantially homogeneous resin mixture. This may be accomplished, for example, by masticating the components in a roll mill or in a similar polymer blending apparatus such as a Banbury mill. The film is then extruded into a film using a standard tubular extruder. Conventional additives such as anti-oxidants, coloring pigments and anti-static agents may be incorporated in minor amounts, such as less than 2% by weight, in the blend during or after the blending operation.

Films of various thicknesses may be manufactured utilizing the novel resin compositions of the present invention. The gauge may generally vary from 0.0025 mm to 0.25 mm (0.1 mil up to 10 mils) and preferably from 12.7 to 50.8 µm (0.5 mil to 2 mils).

In the following examples, films having nominal thicknesses of 38.1 µm (1.5 mils) were prepared. The extrusion system included a 5.1 cm (2 inch) circular die having a 1.27 mm (50 mil) gap. An approximately 2:1 blow up ratio was employed to yield a film tube having a 15.9 cm (6 1/4 inch) lay flat dimension.

The LLDPE employed is identified as GP-2 and is a copolymer of ethylene with about 4 mole percent butene-1. It has a melt flow index of 9 grams/10 minutes and a density of 0.920 gm/cm³. The poly(p - methylstyrene), PPMS, employed had a melt flow index of 9 grams/10 minutes. The polystyrene, PS1240, employed had a melt flow index of 9 grams/10 minutes.

The following table illustrates examples of film blends within the scope of the invention.

TABLE

|  |  | A-1 | A-2 | A-3 | A-4 | A-5 | B-1 | B-2 | B-3 | B-4 |
|---|---|---|---|---|---|---|---|---|---|---|
| GP-2 |  | 100 | 90 | 85 | 80 | 70 | 90 | 85 | 80 | 70 |
| PPMS |  | — | 10 | 15 | 20 | 30 | — | — | — | — |
| PS 1240 |  | — | — | — | — | — | 10 | 15 | 20 | 30 |
| 1% Sec. Modulus | MD | 2.48 | 3.39 | — | — | 10.3 | 6.32 | — | — | 13.6 |
| $\times 10^{-4}$ psi | TD | 2.62 | 2.97 | — | — | 4.2 | 2.73 | — | — | 5.37 |
| Break strength | MD | 5.18 | 2.43 | — | — | 3.45 | 2.29 | — | — | 4.14 |
| psi$\times 10^{-3}$ | TD | 3.91 | 1.76 | — | — | 1.47 | 2.45 | — | — | 1.95 |
| Yield strength | MD | 1.45 | 1.47 | — | — | 3.17 | 2.28 | — | — | 3.87 |
| psi$\times 10^{-3}$ | TD | 1.42 | 1.22 | — | — | 1.42 | 1.65 | — | — | 1.79 |
| %Elongation at | MD | 749 | 598 | — | — | 59 | 541 | — | — | 126 |
| Break | TD | 847 | 586 | — | — | 186 | 648 | — | — | 543 |
| Elmendorf Tear | MD | 74 | 109 | 98 | 50 | (1) | 103 | 112 | 58 | (1) |
| g/mil | TD | 269 | 158 | 72 | 22 | (1) | 141 | 25 | 23 | (1) |
| Spencer impact strength g/mil |  |  |  | 135 | 252 |  |  | 214 | 244 |  |

(1) Less than 30 g/mil
1 psi≈6.895 · $10^3$ Pa
1 g/mil≈0.386 N/mm

Employing LLDPE useful in formulating the subject blends, the data of the foregoing Table show physical characteristics which render the product an excellent substitute for glassine paper and waxed paper.

Neither pigments nor fillers are necessary in order for the film to achieve its dead-fold and paper-tear characteristics. Further, no solvent treatment or surface modification is necessary to bring about these characteristics. The film of the present invention has a high degree of opacity and an attractive pearlescence appearance. As a food or candy wrapper it easily retains a fold or a twist imparted during packaging.

**Claims**

1. A film having deadfold and paper-tear characteristics comprising a uniform blend of from 65 to 90% by weight of a linear low density polyethylene and from 10 to 35% by weight of a polystyrene based on the total weight of the film, the blend containing no fillers.

2. A film according to claim 1 wherein the linear low density polyethylene comprises a copolymer of ethylene and a 1 to 5 mole% of a $C_3$ to $C_{10}$ alpha olefin.

3. A film according to claims 1 or 2 wherein the polystyrene comprises crystal polystyrene, poly(p-methylstyrene) or a mixture thereof.

4. A film according to any preceding claim wherein the $C_3$—$C_{10}$ alpha olefin is butene-1, hexene-1, octene-1.

5. A film according to any preceding claim having a thickness of 0.0025 to 0.25 mm.

**Patentansprüche**

1. Film mit bleibender Falt- und Papierreißeigenschaft, gekennzeichnet durch eine gleichförmige Mischung aus 65 bis 90 Gew.-% eines linearen Polyethylens niedriger Dichte und 10 bis 35 Gew.-% eines Polystyrols, bezogen auf das Gesamtgewicht des Films, wobei die Mischung keine Füllstoffe enthält.

2. Film nach Anspruch 1, worin das lineare Polyethylen niedriger Dichte ein Copolymer aus Ethylen und 1 bis 5 Mol% eines $C_3$- bis $C_{10}$-α-Olefins enthält.

3. Film nach Anspruch 1 oder 2, worin das Polystyrol kristallines Polystyrol, Poly-(p-methylstyrol) oder eine Mischung davon ist.

4. Film nach einem der vorhergehenden Ansprüche, worin das $C_3$- bis $C_{10}$-α-Olefin 1-Buten, 1-Hexen oder 1-Octen ist.

5. Film nach einem der vorhergehenden Ansprüche mit einer Dicke von 0,0025 bis 0,25 mm.

**EP 0 148 567 B1**

**Revendications**

1. Un film ayant des caractéristiques de pli mort et de déchirure du papier comprenant un mélange uniforme de 65 à 90% en poids d'un polyéthylène linéaire basse densité et de 10 à 35% en poids d'un polystyrène basé sur le poids total du film, le mélange ne contenant aucune charge de remplissage.

2. Un film selon la revendication 1, selon laquelle le polyéthylène linéaire basse densité comprend un copolymère d'éthylène et 1 à 5% molaire d'une α-oléfine en $C_3$ à $C_{10}$.

3. Un film selon la revendication 1 ou 2, selon laquelle le polystyrène comprend le polystyrène cristal, le poly(p-méthylstyrène) ou un mélange des deux.

4. Un film selon l'une quelconque des revendications précédentes, selon laquelle l'α-oléfine en $C_3$—$C_{10}$ est le butène-1, l'hexène-1, l'octène-1.

5. Un film selon l'une quelconque des revendications précédentes ayant une épaisseur de 0,0025 à 0,25 mm.